# EUROPEAN PATENT SPECIFICATION

(11) **EP 2 414 423 B1**
(45) Date of publication and mention of the grant of the patent: **30.05.2018**
(21) Application number: 10710724.5
(22) Date of filing: 17.03.2010
(51) Int. Cl.: C08J 9/14, C08G 18/40, C08G 18/42, C08G 101/00, C08G 18/48

(54) **POLYURETHANE AND POLYISOCYANURATE FOAMS HAVING IMPROVED CURING PERFORMANCE AND FIRE BEHAVIOR**
POLYURETHAN- UND POLYISOCYANURAT-SCHAUMSTOFFE MIT VERBESSERTER HÄRTUNGSLEISTUNGSFÄHIGKEIT UND VERBESSERTEM BRANDVERHALTEN
MOUSSES DE POLYURÉTHANE ET DE POLYISOCYANURATE PRÉSENTANT DES PERFORMANCES AMÉLIORÉES DE DURCISSEMENT ET DE COMPORTEMENT AU FEU

(30) Priority: 01.04.2009 US 165620 P
(43) Date of publication of application: 08.02.2012
(73) Proprietor: Dow Global Technologies LLC, Midland, MI 48674 (US)
(72) Inventor: GOLINI, Paolo, I-42100 Reggio Emilia (IT)
(74) Representative: Beck Greener
(86) International application number: PCT/US2010/027563
(87) International publication number: WO 2010/114703

(56) References cited:
- EP-A1- 1 435 366
- EP-A2- 0 125 677
- DE-A1- 19 736 574
- US-B1- 6 281 393

## Description

### BACKGROUND OF THE INVENTION

### 1. Field of the Invention

This invention relates to polyurethane and polyisocyanurate foams. More particularly, it relates to such foams prepared from aromatic polyester polyols that show improved processability over a range of thicknesses, and also improved fire behavior.

### 2. Background of the Art

Polyurethane and polyisocyanurate foams are widely used as insulating materials in the construction industry. Typically these foams are closed-cell, rigid foams containing within the cells a low-conductivity gas, such as a hydrocarbon (HC). The foaming compositions, being liquids, may be used in pour-in-place applications; sprayed applications; and to form rigid foam boards or panels. The panels, which may be produced via continuous or discontinuous process technology, may include a facing, such as a metal foil, to which the foam adheres. These panels may be referred to as sandwich panels.

Unfortunately, these foams, which are frequently formed from polyester polyols and methylene diphenyl diisocyanate (MDI) at an MDI/polyol ratio over 150, may suffer from drawbacks. One frequent problem is that the foams may exhibit poor curing performance, resulting in defects such as shrinkage and deformation. Another problem may relate to fire behavior, as official testing requirements become ever more stringent. One example of a more stringent requirement are new Euroclasses regulations, such as EN13823.

For many polyurethane and polyisocyanurate foams, the polyester polyol employed is an aromatic-based structure. While such foams have many uses, it has been found that inclusion of at least some aliphatic polyester polyol may offer benefits. For example, US 2006/0047011 A1 discloses that polyisocyanurate foams prepared from aliphatic polyester polyols may exhibit improved flame resistance, lower thermal conductivity, reduced brittleness and improved surface adhesion. Low viscosity enables potential use in spray foams. The aliphatic polyols used therein are based on a combination of adipic, glutaric, succinic and nitric acids with water, esterified with ethylene glycol. These polyols have hydroxyl (OH) numbers of greater than 200 and viscosities in the range of 2,000 mPa*s.

In another example, a combination of aliphatic and aromatic polyester polyols is described in US 2001/0003758 as useful for preparing rigid isocyanurate-modified polyurethane foams. The foams have an isocyanate index ranging from 80 to 380.

EP 1 435 366 A1 discloses a polyol composition comprising an aromatic polyether polyol, preferably based on the condensation product of a phenol with an aldehyde and as blowing agent, formic acid. The polyol composition finds utility in the manufacture of polyurethane and particularly polyisocyanurate foams having attractive flame retardant and reduced smoke generation characteristics.

Notwithstanding the above-described art, there is still a need for polyurethane and polyisocyanurate foams exhibiting improvements in curing and fire behavior performance. These and other features may be found in the present invention.

### SUMMARY OF THE INVENTION

In one aspect the invention provides polyurethane or polyisocyanurate foam formulation comprising (a) a formulated polyol comprising (i) from 20 to 60 percent by weight of an aromatic polyester polyol having a hydroxyl number greater than 50 mg KOH/g and a functionality equal to or greater than 2; (ii) from 10 to 30 percent by weight of a Novolac-type polyether polyol; and (iii) from 5 to 40 percent by weight of a sucrose- or sorbitol-initiated polyol having a hydroxyl number greater than 200 mg KOH/g and a functionality of at least 4; all percentages being based upon the formulated polyol as a whole; (b) a polyisocyanate; and (c) a blowing agent; such that the stoichiometric index of the isocyanate to the formulated polyol is from 100 to 250; and wherein the foam formulation is suitable for preparing a polyurethane or polyisocyanurate foam showing processability and fire behavior that are improved in comparison with polyurethane or polyisocyanurate foams prepared from foam formulations that are the same except for the formulated polyol. The invention includes the formulated polyol and a foam made from the given formulation.

In another aspect the invention provides a method of preparing a polyurethane or polyisocyanurate foam comprising contacting under foam-forming conditions (a) a formulated polyol comprising (i) from 20 to 60 percent by weight of an aromatic polyester polyol having a hydroxyl number greater than 50 mg KOH/g and a functionality equal to or greater than 2; (ii) from 10 to 30 percent by weight of a Novolac-type polyether polyol; (iii) from 5 to 40 percent by weight of a sucrose- or sorbitol-initiated polyol having a hydroxyl number greater than 200 mg KOH/g and a functionality of at least 4; all percentages being based upon the formulated polyol as a whole; (b) a polyisocyanate; and (c) a blowing agent; at an isocyanate index ranging from 100 to 250; to form a rigid polyurethane or polyisocyanurate foam. The invention also includes a foam prepared by this method.

### DETAILED DESCRIPTION OF THE EMBODIMENTS

The invention offers both process and property improvements that are advantageous in the polyurethane and polyisocyanurate industry. As used herein, the term "polyisocyanurate" includes both polyisocyanurate foams and urethane-modified polyisocyanurate (PU-PIR) foams.

### Formulated Polyol

### 1) Aromatic polyester polyol

The first component is an aromatic polyester polyol. As used herein, "aromatic" refers to organic compounds having at least one conjugated ring of alternate single and double bonds, which imparts an overall stability to the compounds. The term "polyester polyol" as used herein includes any minor amounts of unreacted polyol remaining after the preparation of the polyester polyol and/or unesterified polyol (for example, glycol) added after the preparation of the polyester polyol. While the aromatic polyester polyol may be prepared from substantially pure reactant materials, more complex starting materials, such as polyethylene terephthalate, may be advantageous. Other residues are dimethyl terephthalate (DMT) process residues, which are waste or scrap residues from the manufacture of DMT.

The aromatic polyester polyol may optionally contain, for example, halogen atoms and/or may be unsaturated, and may generally be prepared from the same selection of starting materials as described hereinabove, but at least one of the polyol or the polycarboxylic acid, preferably the acid, is an aromatic compound having an aromatic ring content (expressed as weight percent of groups containing at least one aromatic ring per molecule) that is at least 50 percent by weight, based on the total compound weight, and preferably greater than 50 percent by weight, i.e., it is predominantly aromatic in nature. Polyester polyols having an acid component that advantageously comprises at least 30 percent by weight of phthalic acid residues, or residues of isomers thereof, are particularly useful. Preferably the aromatic ring content of the aromatic polyester polyol is from a70 to 90 percent by weight, based on the total compound weight. Preferred aromatic polyester polyols are the crude polyester polyols obtained by the transesterification of crude reaction residues or scrap polyester resins.

The aromatic polyester polyol is also characterized in that it has a hydroxyl number of greater than 50 mg KOH/g, and in certain embodiments a functionality that is equal to or greater than 2. In preferred embodiments, the hydroxyl number ranges from greater than 50 to 400 mg KOH/g, and in more preferred embodiments the hydroxyl number ranges from a 150 to 300 mg KOH/g. The functionality may range from 1.5 to 8, but in certain non-limiting embodiments may range from 2 to 8, and in still other non-limiting embodiments may range from 2 to 6.

### 2) Novolac-type polyether polyol

The second component is a Novolac-type polyether polyol. Novolac-type polyether polyols are the alkoxylation products of a phenol-formaldehyde resin, which is formed by the elimination reaction of phenol with formaldehyde in the presence of an acid catalyst, such as glacial acetic acid, followed by concentrated hydrochloric acid. Usually a small amount of the acid catalyst or catalysts is/are added to a miscible phenol, such as p-toluenesulfonic acid, followed by formaldehyde. The formaldehyde will react between two phenols to form a methylene bridge, creating a dimer by electrophilic aromatic substitution between the ortho and para positions of phenol and the protonated formaldehyde. This dimer is bisphenol F. Another example is bisphenol A, which is the condensation product of acetone with two phenols. As concentration of dimers increase, trimers, tetramers and higher oligomers may also form. However, because the molar ratio of formaldehyde to phenol is controlled at somewhat less than 1, polymerization is not completed. Thus, the Novolac may then be alkoxylated to build molecular weight to a desired level, desirably from 300 to 1500, and in certain non-limiting embodiments, from 400 to 1000.

Phenols which may be used to prepare the Novolac initiator include: o-, m-, or p-cresols, ethylphenol, nonylphenol, p-phenylphenol, 2,2-bis(4-hydroxyphenol) propane, beta-naphthol, beta-hydroxyanthracene, p-chlorophenol, o-bromophenol, 2,6-dichlorophenol, p-nitrophenol, 4-nitro-6-phenylphenol, 2-nitro-4-methylphenol, 3,5-dimethylphenol, p-isopropylphenol, 2-bromo-4-cyclohexylphenol, 4-t-butylphenol, 2-methyl-4-bromophenol, 2-(2-hydroxypropyl)phenol, 2-(4-hydroxyphenol)ethanol, 2-carbethoxyphenol, 4-chloro-methylphenol, and mixtures thereof. It is especially preferred that the phenols used to prepare the Novolac-type polyether polyols be unsubstituted.

Suitable Novolac-type polyether polyols may be produced, for example, by reacting a condensate adduct of phenol and formaldehyde with one or more alkylene oxides including ethylene oxide, propylene oxide, and butylene oxide. Such polyols, sometimes referred to as Novolac-initiated polyols, are known to those skilled in the art, and may be obtained by methods such as are disclosed in, for example, U.S. Patents. 2,838,473; 2,938,884; 3,470,118; 3,686,101; and 4,046,721. Typically, Novolac starting materials are prepared by reacting a phenol (for example, a cresol) with from 0.8 to 1.5 moles of formaldehyde per mole of the phenol in the presence of an acidic catalyst to form a polynuclear condensation product containing from 2.1 to 12, preferably from 2.2 to 6, and more preferably from 3 to 5 phenol units per molecule. The Novolac resin is then reacted with an alkylene oxide such as ethylene oxide, propylene oxide, butylene oxide, or isobutylene oxide to form an oxyalkylated product containing a plurality of hydroxyl groups. For the purpose of the present invention, preferred Novolac polyols are those having an average of from 3 to 6 hydroxyl moieties per molecule and an average hydroxyl number of from 100 to 500 mg KOH/g, preferably from 100 to 300 mg KOH/g.

### 3) Sucrose- or sorbitol-initiated polyol

A third required component of the formulated polyol is a sucrose- or sorbitol-initiated polyol. This polyol is a polyether polyol, and may have a hydroxyl number of greater than 200 mg KOH/g and a functionality of at least 4. Even higher functionality, ranging from 4.5 to 6.0, may be particularly desirable in some embodiments.

Sucrose may be obtained from sugar cane or sugar beets, honey, sorghum, sugar maple, and fruit. Means of extraction, separation, and preparation of the sucrose component vary depending upon the source, but are widely known and practiced on a commercial scale by those skilled in the art.

Sorbitol may be obtained via the hydrogenation of D-glucose over a suitable hydrogenation catalyst. Fixed beds and similar types of equipment are especially useful for this reaction. Suitable catalysts may include, for example, Raney™ (Grace-Davison) catalysts, such as employed in Wen, Jian-Ping, et. al., "Preparation of sorbitol from D-glucose hydrogenation in gas-liquid-solid three-phase flow airlift loop reactor," The Journal of Chemical Technology and Biotechnology, vol. 4, pp. 403-406 (Wiley Interscience, 2004). Nickel-aluminum and ruthenium-carbon catalysts are just two of the many possible catalysts.

In an alternative embodiment, preparation of sorbitol may begin with a starch hydrolysate which has been hydrogenated. The starch is a natural material derived from corn, wheat and other starch-producing plants. To form the hydrolysate, the starch polymer molecule may be broken into smaller oligomers at the ether bond between glucose rings, to produce glucose, maltose and higher molecular weight oligo- and polysaccharides. The resulting molecules, having hemiacetal glucose rings as end units, may then be hydrogenated to form sorbitol, maltitol and hydrogenated oligo- and polysaccharides. Hydrogenated starch hydrolysates are commercially available and inexpensive, often in the form of syrups, and provide the added benefit of being a renewable resource. This method may further require a separation of either the glucose, prior to hydrogenation, or of the sorbitol after hydrogenation, in order to prepare a suitable sorbitol-initiated polyol therefrom. In general, the hydrogenation reduces or eliminates the end units' tendency to form the hydroxyaldehyde form of glucose. Therefore, fewer side reactions of the sorbitol, such as Aldol condensation and Cannizzaro reactions, may be encountered. Furthermore, the final polyol will comprise reduced amounts of by-products.

The sucrose- or sorbitol-initiated polyol may be made by polymerizing alkylene oxides onto the specified initiator in the presence of a suitable catalyst. In one embodiment, each of the initiators may be individually alkoxylated in separate reactions and the resulting polyols blended to achieve the desired component of the formulated polyol. In another embodiment, the initiators may be mixed together prior to alkoxylation, thereby serving as co-initiators, prior to preparing the polyol component having a target hydroxyl number and functionality.

To accomplish the alkoxylation, the alkylene oxide or mixture of alkylene oxides may be added to the initiator(s) in any order, and can be added in any number of increments or added continuously. Adding more than one alkylene oxide to the reactor at a time results in a block having a random distribution of the alkylene oxide molecules, a so-called heteric block. To make a block polyoxy-alkylene of a selected alkylene oxide, a first charge of alkylene oxide is added to an initiator molecule in a reaction vessel. After the first charge, a second charge can be added and the reaction can go to completion. Where the first charge and the second charge have different relative compositions of alkylene oxides, the result is a block polyoxyalkylene. It is preferred to make block polyols in this fashion where the blocks thus formed are either all ethylene oxide, or all propylene oxide, or all butylene oxide, but intermediate compositions are also possible. The blocks can be added in any order, and there may be any number of blocks. For example, it is possible to add a first block of ethylene oxide, followed by a second block of propylene oxide. Alternatively, a first block of propylene oxide may be added, followed by a block of ethylene oxide. Third and subsequent blocks may also be added. The composition of all the blocks is to be chosen so as to give the final material the properties required for its intended application.

### The Blowing Agent(s)

Also included in the polyol composition is a chemical blowing agent, which may be selected based in part upon the desired density of the final foam. In certain non-limiting embodiments hydrocarbon blowing agents may be selected. For example, hydrocarbon or fluorine-containing hydrohalocarbon blowing agents may be used, and in some instances may serve to reduce, or further reduce, viscosity, and thereby to enhance sprayability. Among these are, for example, butane, isobutane, 2,3-dimethylbutane, n- and i-pentane isomers, hexane isomers, heptane isomers, cycloalkanes including cyclopentane, cyclohexane, cycloheptane, and combinations thereof, HFC-245fa (1,1,1,3,3-pentafluoropropane), HFC-365mfc (1,1,1,3,3-penta-fluorobutane), HFC-227ea (1,1,1,2,3,3,3-heptafluoropropane), HFC-134a (1,1,1,2-tetrafluoroethane) and combinations of two or more of the above. These hydrocarbons and/or non-fluorine-containing hydrohalocarbons are preferably used in an amount such that the total blowing agent, including the hydrofluorocarbon, is no more than 15 parts, more desirably no more than 10 parts, based on 100 parts of the total polyol composition.

An optional chemical blowing agent that may be selected is formic acid or another carboxylic acid. The formic acid may be used in an amount of from 0.5 to 8 parts per 100 parts by weight of the polyol composition. In certain non-limiting embodiments, the formic acid is present in an amount from 0.5 parts and more preferably from 1 part, up to 6 parts and more preferably to 3.5 parts by weight. While formic acid is the carboxylic acid of preference, it is also contemplated that minor amounts of other aliphatic mono- and polycarboxylic acids may be employed, such as those disclosed in U.S. Patent 5,143,945, and including isobutyric acid, ethylbutyric acid, ethylhexanoic acid, and combinations thereof.

In addition to, or in lieu of, the formic acid or other carboxylic acid blowing agent, water may also be optionally selected as a chemical blowing agent. The water is, in some non-limiting embodiments, present in an amount of from 0.5 to 10 parts, and preferably from 1 to 6 parts, per 100 parts by weight of the formulated polyol. When preparing a polyurethane or polyisocyanurate foam, in order to facilitate and give desirable processing characteristics, it is advantageous not to exceed 4 parts of water, preferably not more than 2.5 parts of water, and more preferably not more than 1.5 parts of water, per 100 parts of polyol composition. Omission of water is desirable in some non-limiting embodiments.

Finally, carbamates, which release carbon dioxide during the foaming process, and their adducts may also be used advantageously as an optional, additional chemical blowing agent. Such are discussed in greater detail in, for example, U.S. Patents 5,789,451 and 6,316,662, and EP 1 097 954.

### Proportions in Formulated Polyol

The three minimum required components of the formulated polyol (not including blowing agent(s)) are, in certain non-limiting embodiments, present in specific proportion ranges in order to improve their storage stability after they are combined. While the aromatic polyester polyol may range from 20 to 60 percent by weight, based on the weight of the formulated polyol as a whole, the Novolac-type polyether polyol may range from 10 to 30 weight percent by weight, preferably from 20 to 30 percent by weight. It is desirable in some embodiments that the aromatic polyester polyol be limited to a range from 20 to 40 percent by weight. The sucrose- or sorbitol-initiated polyol is desirably present in an amount ranging from 5 to 40 percent by weight, on the same basis. Combinations of more than one of each type of polyol may also be selected, provided their combined percentages in the formulated polyol as a whole comply with the stated ranges. The hydrocarbon or hydrohalocarbon blowing agent, whether included in the formulated polyol or introduced separately during the foam preparation, is desirably present in an amount from 2 to 15 parts, based on 100 parts of the formulated polyol, and more desirably in an amount from 4 to 10 parts on the same basis.

### The Polyisocyanate

In order to prepare a polyisocyanurate foam, it is necessary to react the polyol composition with a polyisocyanate component under appropriate foam-forming conditions. The polyisocyanate component is referred to in the United States as the "A-component" (in Europe, as the "B-component"). Selection of the A-component may be made from a wide variety of polyisocyanates, including but not limited to those that are well known to those skilled in the art. For example, organic polyisocyanates, modified polyisocyanates, isocyanate-based prepolymers, and mixtures thereof may be employed. These may further include aliphatic and cycloaliphatic isocyanates, and in particular aromatic and, more particularly, multifunctional aromatic isocyanates. Also particularly preferred are polyphenyl polymethylene polyisocyanates (PMDI).

Other polyisocyanates useful in the present invention include 2,4- and 2,6-toluenediisocyanate and the corresponding isomeric mixtures; 4,4'-, 2,4'- and 2,2'-diphenyl-methanediisocyanate and the corresponding isomeric mixtures; mixtures of 4,4'-, 2,4'- and 2,2'-diphenyl-methanediisocyanates and polyphenyl polymethylene polyisocyanates (PMDI); and mixtures of PMDI and toluene diisocyanates. Also useful herein are aliphatic and cycloaliphatic isocyanate compounds, such as 1,6-hexamethylenediisocyanate; 1 -isocyanato-3,5,5-trimethyl-3-isocyaantomethylcyclohexane; 2,4- and 2,6-hexahydrotoluene-diisocyanate and their corresponding isomeric mixtures; and 4,4'-, 2,2'- and 2,4'-dicyclohexyl-methanediisocyanate and their corresponding isomeric mixtures. Also useful in the present invention is 1,3-tetramethylene xylene diisocyanate.

Also advantageously used for the A-component are the so-called modified multifunctional isocyanates, that is, products which are obtained through chemical reactions of the above diisocyanates and/or polyisocyanates. Exemplary are polyisocyanates containing esters, ureas, biurets, allophanates and, preferably, carbodiimides and/or uretonomine, and isocyanurate and/or urethane group-containing diisocyanates or polyisocyanates. Liquid polyisocyanates containing carbodiimide groups, uretonomine groups and/or isocyanurate rings, having isocyanate groups (NCO) contents of from 120 to 40 weight percent, more preferably from 20 to 35 weight percent, can also be used. These include, for example, polyisocyanates based on 4,4'- 2,4'- and/or 2,2'-diphenylmethane diisocyanate and the corresponding isomeric mixtures, 2,4- and/or 2,6-toluenediisocyanate and the corresponding isomeric mixtures; mixtures of diphenylmethane diisocyanates and PMDI; and mixtures of toluenediisocyanates and PMDI and/or diphenylmethane diisocyanates.

Suitable prepolymers for use as the polyisocyanate component of the formulations of the present invention are prepolymers having NCO contents of from 2 to 40 weight percent, more preferably from 4 to 30 weight percent. These prepolymers are prepared by reaction of the di- and/or poly-isocyanates with materials including lower molecular weight diols and triols, but also can be prepared with multivalent active hydrogen compounds such as di- and tri-amines and di- and tri-thiols. Individual examples include aromatic polyisocyanates containing urethane groups, preferably having NCO contents of from 5 to 40 weight percent, more preferably 20 to 35 weight percent, obtained by reaction of diisocyanates and/or polyisocyanates with, for example, polyols such as lower molecular weight diols, triols, oxyalkylene glycols, dioxyalkylene glycols, or polyoxyalkylene glycols having molecular weights up to 800. These polyols can be employed individually or in mixtures as di- and/or polyoxyalkylene glycols. For example, diethylene glycols, dipropylene glycols, polyoxyethylene glycols, ethylene glycols, propylene glycols, butylene glycols, polyoxypropylene glycols and polyoxypropylene polyoxyethylene glycols can be used. Polyester polyols can also be used, as well as alkyl diols such as butane diol. Other diols also useful include bishydroxyethyl- or bishydroxypropyl-bisphenol A, cyclohexane dimethanol, and bishydroxyethyl hydroquinone.

Useful as the polyisocyanate component of prepolymer formulations that may be employed in the present invention are: (i) polyisocyanates having an NCO content of from 8 to 40 weight percent containing carbodiimide groups and/or urethane groups, from 4,4'-diphenylmethane diisocyanate or a mixture of 4,4'- and 2,4'-diphenylmethane diisocyanates; (ii) prepolymers containing NCO groups, having an NCO content of from 2 to 35 weight percent, based on the weight of the prepolymer, prepared by the reaction of polyols having a functionality of preferably from 1.75 to 4 and a molecular weight of from 800 to 15,000 with either 4,4'-diphenylmethane diisocyanate, a mixture of 4,4'- and 2,4'-diphenylmethane diisocyanate, or a mixture of (i) and (ii); and (iii) 2,4' and 2,6-toluene-diisocyanate and their corresponding isomeric mixtures.

PMDI in any of its forms is the most preferred polyisocyanate for use with the present invention. When used, it preferably has an equivalent weight between 125 and 300, more preferably from 130 to 175, and an average functionality of greater than 1.5. More preferred is an average functionality of from 1.75 to 3.5. The viscosity of the polyisocyanate component is preferably from 25 to 5,000 centipoise (cP) (0.025 to 5 Pa*s), but values from 100 to 1,000 cP at 25°C (0.1 to 1 Pa*s) are preferred for ease of processing. Similar viscosities are preferred where alternative polyisocyanate components are selected. Still, preferably the polyisocyanate component of the formulations of the present invention is selected from the group consisting of MDI, PMDI, an MDI prepolymer, a PMDI prepolymer, a modified MDI, and mixtures thereof.

In proportion it is desirable that the ratio of the A-component to the B-component (polyisocyanate to formulated polyol) ranges from 100 to 250, that is to say, an isocyanate index of from 1 to 2.5; in some non-limiting embodiments, the isocyanate index is desirably from 1.5 to 1.8, that is, so-called "medium index" foams.

### Optional Formulation Components

Other polyols may also be included in the formulated polyol and/or in the final formulation, in addition to the three denoted hereinabove as required, and, if included, are considered to be part of the formulation's B-component. While these additional materials are typically included as part of the B-component during the formulating process, such are treated here separately because they are considered to be optional. Such may include one or more other polyether or polyester polyols of the kind typically employed in processes to make polyurethane and/or polyisocyanurate foams. Other compounds having at least two isocyanate-reactive hydrogen atoms may also be present, for example, polythioether polyols, polyester amides and polyacetals containing hydroxyl groups, aliphatic polycarbonates containing hydroxyl groups, amine terminated polyoxyalkylene polyethers, and preferably, polyester polyols, polyoxyalkylene polyether polyols, and graft dispersion polyols. Mixtures of two or more of the aforesaid materials may also be employed. In many embodiments such polyols have from 2 to 8 hydroxyl groups per molecule, a molar average functionality of at least 3 or more, and a hydroxyl number of greater than 100 mg KOH/g, and in certain embodiments, greater than 300 mg KOH/g.

In some non-limiting embodiments, the formulated polyol may also include one or more chain extenders and/or crosslinkers. Where selected, chain extenders may be bifunctional, low molecular weight alcohols, in particular those having a molecular weight of up to 400, for example ethylene glycol, propylene glycol, butanediol, hexanediol, and mixtures thereof. Crosslinkers, in many embodiments, are at least trifunctional, and may be selected from, for example, low molecular weight alcohols such as glycerol, trimethylolpropane, pentaerythritol, sucrose, sorbitol, or mixtures thereof.

The formulation of the present invention may include further additives or modifiers such as are well-known in the art. For example, surfactants, catalysts, flame retardants, and/or fillers may be employed. Of particular significance are one or more trimerization catalysts. The trimerization catalyst employed may be any known to those skilled in the art that will catalyze the trimerization of an organic isocyanate compound to form the isocyanurate moiety. For typical isocyanate trimerization catalysts, see The Journal of Cellular Plastics, November/December 1975, page 329: and U.S. Patents 3,745,133; 3,896,052; 3,899,443; 3,903,018; 3,954,684 and 4,101,465. Typical trimerization catalysts include the glycine salts, tertiary amine trimerization catalysts, alkali metal carboxylic acid salts, and mixtures of these classes of catalysts. Preferred species within the classes are sodium N-2-hydroxy-5-nonylphenyl-methyl-N-methylglycinate, N,N-dimethylcyclohexyl-amine, and mixtures thereof. Also included in the preferred catalyst components are the epoxides disclosed in U.S. Patent 3,745,133.

Another category of catalysts that may be included is the amine catalysts, including any organic compound which contains at least one tertiary nitrogen atom and is capable of catalyzing the hydroxyl/isocyanate reaction between the A-component and B-component. Typical classes of amines include the N-alkylmorpholines, N-alkylalkanolamines, N,N-dialkylcyclohexylamines, and alkylamines where the alkyl groups are methyl, ethyl, propyl, butyl and isomeric forms thereof, and heterocyclic amines. Typical but non-limiting thereof are triethylenediamine, tetramethylethylenediamine, bis(2-dimethylaminoethyl)ether, triethylamine, tripropylamine, tributylamine, triamylamine, pyridine, quinoline, dimethylpiperazine, piperazine, N,N-dimethylcyclohexylamine, N-ethylmorpholine, 2-methylpropanediamine, methyltriethyl-enediamine, 2,4,6-tridimethylamino-methyl)phenol, N,N',N"-tris(dimethylamino-propyl)sym-hexahydrotriazine, and mixtures thereof. A preferred group of tertiary amines from which selection may be made comprises bis(2-dimethylamino-ethyl)ether, dimethylcyclohexylamine, N,N-dimethylethanolamine, triethylenediamine, triethylamine, 2,4,6-tri(dimethylaminomethyl)phenol, N,N',N-ethylmorpholine, and mixtures thereof.

Non-amine catalyst may also be used in the present invention. Typical of such catalysts are organometallic compounds of bismuth, lead, tin, titanium, iron, antimony, uranium, cadmium, cobalt, thorium, aluminum, mercury, zinc, nickel, cerium, molybdenum, vanadium, copper, manganese, zirconium, and combinations thereof. Included for illustrative purposes only are bismuth nitrate, lead 2-ethylhexoate, lead benzoate, lead naphthenate, ferric chloride, antimony trichloride, antimony glycolate and combinations thereof. A preferred class includes the stannous salts of carboxylic acids, such as stannous acetate, stannous octoate, stannous 2-ethylhexoate, 1-methylimidazole, and stannous laurate, as well as the dialkyl tin salts of carboxylic acids, such as dibutyl tin diacetate, dibutyl tin dilaurate, dibutyl tin dimaleate, dioctyl tin diacetate and combinations thereof. Catalysts, such as NIAX™ A-1, POLYCAT™ 9 and/or POLYCAT™ 77, may be included in amounts from 1 to 8 parts, total, of B-component. (NIAX™ A-1 is available from General Electric. POLYCAT™ 9 and POLYCAT™ 77 are available from Air Products.) Additional catalysts, such as TOYOCAT™ DM 70 or other gelling catalysts, may be included in amounts ranging from 0 to 2 parts. (TOYOCAT™ DM 70 is available from Tosoh Corporation.)

While the basic formulation enables preparation of foams having improved fire behavior, as defined hereinbelow, in some embodiments it may be desirable to further enhance fire performance by including, as additives, one or more brominated or non-brominated flame retardants, such as tris(2-chloroethyl)phosphate, tris(2-chloropropyl)phosphate, tris(1,3-dichloropropyl)phosphate, diammonium phosphate, various halogenated aromatic compounds, antimony oxide, alumina trihydrate, polyvinyl chloride, and combinations thereof. Dispersing agents, cell stabilizers, and surfactants may also be incorporated into the formulations.

Surfactants, including organic surfactants and silicone based surfactants, may be added to serve as cell stabilizers. Some representative materials are sold under the designations SF1109, L520, L521 and DC193, which are, generally, polysiloxane polyoxylalkylene block copolymers, such as those disclosed in U.S. Patents 2,834,748; 2,917,480; and 2,846,458. Also included are organic surfactants containing polyoxyethylene-polyoxybutylene block copolymers, as are described in U.S. Patent 5,600,019. It is particularly desirable to employ a minor amount of a surfactant to stabilize the foaming reaction mixture until it cures. Other surfactants include polyethylene glycol ethers of long-chain alcohols, tertiary amine or alkanolamine salts of long-chain allyl acid sulfate esters, alkylsulfonic esters, alkyl arylsulfonic acids, and combinations thereof.

Such surfactants are employed in amounts sufficient to stabilize the foaming reaction against collapse and the formation of large uneven cells. Typically, from 0.2 to 3 parts of the surfactant per 100 parts by weight of the formulated polyol are sufficient for this purpose. Surfactants, such as DABCO™ DC5598, may be included in any amount ranging from 0 to 6 parts. (DABCO™ DC5598 is available from Air Products).

Other additives may include, but are not limited to, carbon black and colorants, fillers and pigments. Examples may include barium sulfate, calcium carbonate, graphite, carbon black, titanium dioxide, iron oxide, microspheres, alumina trihydrate, wollastonite, prepared glass fibers (dropped or continuous), and polyester fibers and other polymeric fibers, as well as various combinations thereof.

### Foam Preparation

The polyurethane or polyisocyanurate polymer prepared according to the process of this invention is in certain non-limiting embodiments a rigid, foamed, closed-cell polymer. Such a polymer is typically prepared by intimately mixing the reaction components, i.e., a polyol/blowing agent component (consisting essentially of or comprising the formulated polyol and blowing agent defined hereinabove), along with an isocyanate component, i.e., at least two streams; or a polyol component (consisting essentially of or comprising the formulated polyol defined hereinabove), a blowing agent component, and an isocyanate component, i.e., at least three streams, wherein the formulated polyol and blowing agent component mix just prior to contact thereof with the isocyanate component) at room temperature or at a slightly elevated temperature for a short period. Additional streams may be included, as desired, for the introduction of various catalysts and other additives. Mixing of streams may be carried out either in a spray apparatus, a mixhead with or without a static mixer for combining the polyol component and blowing agent, or a vessel, and then spraying or otherwise depositing the reacting mixture onto a substrate. This substrate may be, for example, a rigid or flexible facing sheet made of foil or another material, including another layer of similar or dissimilar polyurethane or polyisocyanurate which is being conveyed, continuously or discontinuously, along a production line, or directly onto a conveyor belt.

In alternative embodiments the reacting mixture may be poured into an open mold or distributed via laydown equipment into an open mold or simply deposited at or into a location for which it is destined, i.e., a pour-in-place application, such as between the interior and exterior walls of a structure. In the case of deposition on a facing sheet, a second sheet may be applied on top of the deposited mixture. In other embodiments, the mixture may be injected into a closed mold, with or without vacuum assistance for cavity-filling. If a mold is employed, it is most typically heated.

In general, such applications may be accomplished using the known one-shot, prepolymer or semi-prepolymer techniques used together with conventional mixing methods. The mixture, on reacting, takes the shape of the mold or adheres to the substrate to produce a polyurethane or polyisocyanurate polymer of a more-or-less predefined structure, which is then allowed to cure in place or in the mold, either partially or fully. Suitable conditions for promoting the curing of the polymer include a temperature of typically from 20°C to 150°C, preferably from 35°C to 75°C, and more preferably from 45°C to 55°C. Such temperatures will usually permit the sufficiently cured polymer to be removed from the mold, where such is used, typically within from 1 to 10 minutes and more typically within from 1 to 5 minutes after mixing of the reactants. Optimum cure conditions will depend upon the particular components, including catalysts and quantities used in preparing the polymer and also the size and shape of the article manufactured.

The result may be a rigid foam in the form of slabstock, a molding, a filled cavity, including but not limited to a pipe or insulated wall or hull structure, a sprayed foam, a frothed foam, or a continuously- or discontinuously-manufactured laminate product, including but not limited to a laminate or laminated product formed with other materials, such as hardboard, plasterboard, plastics, paper, metal, or a combination thereof. Advantageously, the polyurethane and polyisocyanurate foams prepared in the present invention may show improved processability when compared with foams from formulations and preparation methods that are similar except that the formulations do not comprise the specific formulated polyol used in the present invention. As used herein, the term "improved processability" refers to the capability of the foam to exhibit reduced defects, which may include but are not limited to shrinkage and deformation. This improvement may be particularly advantageous when the invention is used in the manufacture of sandwich panels. It is preferable that such reduced levels of shrinkage and deformation be less than 0.5 percent as linear deformation, as tested according to European Standard EN 1603 at 80°C, with specimen dimensions recorded after 20 hours. Sandwich panels may be defined, in some embodiments, as comprising at least one relatively planar layer (i.e., a layer having two relatively large dimensions and one relatively small dimension) of the rigid foam, faced on each of its larger dimensioned sides with at least one layer, per such side, of flexible or rigid material, such as a foil or a thicker layer of a metal or other structure-providing material. Such a layer may, in certain embodiments, serve as the substrate during formation of the foam.

Also advantageously, the polyurethane and polyisocyanurate foams prepared in the present invention may exhibit improved fire behavior when compared with foams from formulations and preparation methods that are similar except that the formulations do not comprise the specific formulated polyol used in the present invention. As used herein, the term "improved fire behavior" refers to the capability of the foam to exhibit B2 fire behavior, which is defined as having a flame height of not higher than 15 centimeters when tested according to German Standard DIN 4102. In certain embodiments the invention may be useful in satisfying fire requirements based on new Euroclasses regulations (European Standard EN 12823).

In addition, the polyisocyanurate and polyurethane foams of the invention may exhibit improved curing properties, including improved green compressive strength and reduced post expansion at selected foam demolding time. Testing to determine these properties is described in the footnotes to Table 1 and Table 3, respectively. These features may be particularly advantageous when the invention is employed to produce insulated sandwich panels.

The description hereinabove is intended to be general and is not intended to be inclusive of all possible embodiments of the invention. Similarly, the examples hereinbelow are provided to be illustrative only and are not intended to define or limit the invention in any way.

### EXAMPLES

Materials employed in the examples and/or comparative examples include the following, given in alphabetical order.
**CM265** is an additive blend of water and VORANOL™ RN490 (50/50 by weight).
**CP1055** is VORANOL™ CP1055, having a hydroxyl number of 165 mg KOH/g and a functionality of 3, available from The Dow Chemical Company.
**CURITHANE™ 52** is sodium N-(2-hydroxy-5-nonylphenyl) methyl)-N-methylglycine in diethylene glycol.
**DABCO™ DC5598** is a proprietary silicone surfactant, available from Air Products.
**DABCO™ K2097** is a potassium acetate-based trimerization catalyst.
**IP 585** is Polyol IP 585, an aromatic resin-initiated oxypropylene-oxyethylene polyol (Novolac-type polyol) with hydroxyl number of 195 mg KOH/g and average functionality of 3.3.
**"OTHER COMPONENTS"** includes propylene carbonate.
**PEG 200** is polyethylene glycol having an average molecular weight of about 200.
**PEG 400** is polyethylene glycol having an average molecular weight of about 400.
**TERATE™ 2541V** is an aromatic polyester polyol, having a hydroxyl number of about 240 mg KOH/g, available from INVISTA.
**TERCAROL™ 5902** is a toluenediamine-initiated polyoxypropylene polyol, having a hydroxyl number of 385 mg KOH/g, available from INVISTA.
**TMR** is 75 percent N-(2-hydroxypropyl)-N-trimethylammonium carboxylate in ethylene glycol.
**VORANATE™ M600** is a high crude diphenylmethane diisocyanate having a functionality of 2.9, available from The Dow Chemical Company.
**VORANOL™ 1010L** is a polypropylene glycol having a hydroxyl number of 112 mg KOH/g. It is available from The Dow Chemical Company.
**VORANOL™ P400,** a polypropylene oxide-based diol with a molecular weight of 400, is available from The Dow Chemical Company.
**VORANOL™ RA640** is a polyether polyol prepared by propoxylating ethylenediamine and has a hydroxyl number of 640 mg KOH/g. It is available from The Dow Chemical Company.
**VORANOL™ RN490** is a sucrose-glycerine initiated polyoxypropylene polyol, having an hydroxyl number of 485 mg KOH/g.

### Example 1 and Comparative Examples 2-5

Five formulated polyols are prepared, each including a sucrose-initiated polyol (VORANOL™ RN490) and a Novolac-type polyol (IP 585). Only Example 1 includes an aromatic polyester polyol, which is TERATE™ 2541V; the Comparative Examples replace the aliphatic polyester polyol with a polyether polyol of equivalent functionality. The formulated polyol is then, for Comparative Examples 2-5, combined with a chain extender, and, for Example 1 and Comparative Examples 2-5, a fire retardant, silicone surfactant, catalysts, water, and other components. The mixture is then reacted with an isocyanate (VORANATE™ M600) and n-pentane, at an index of 1.8, to form a free rise foam. The compositions of each formulation are shown in Table 1. Curing properties are tested by measuring green compressive strength at five (5) minutes, and the results are also shown in Table 1. Finally, the fire behavior of each of the foams is tested according to German Standard DIN 4102, with the results shown in Table 1.

**Table 1**

| Component (pbw) | Example 1 | Comparative Example 2 | Comparative Example 3 | Comparative Example 4 | Comparative Example 5 |
|---|---|---|---|---|---|
| VORANOL™ RN490 | 25 | 25 | 25 | 25 | 25 |
| TERATE™ 2541V | 27.65 | -- | -- | -- | -- |
| TERCAROL™ 5902 | -- | -- | -- | -- | -- |
| IP 585 | 21.65 | 21.65 | 21.65 | 21.65 | 21.65 |
| PEG 200 | -- | 27.65 | -- | -- | -- |
| PEG 400 | -- | -- | 27.65 | -- | -- |
| VORANOL™ P400 | -- | -- | -- | 27.65 | -- |
| VORANOL™ 1010L | -- | -- | -- | -- | 27.65 |
| Trichloroiso-propyl phosphate | 6.58 | 6.58 | 6.58 | 6.58 | 6.58 |
| Triethyl phosphate | 7.72 | 7.72 | 7.72 | 7.72 | 7.72 |
| DABCO™ DC5598 | 1.8 | 1.8 | 1.8 | 1.8 | 1.8 |
| DABCO™ K2097 | 1 | 1 | 1 | 1 | 1 |
| Dimethylcyclohexylamine | 1.1 | 1.1 | 1.1 | 1.6 | 1.8 |
| Water | 1.7 | 1.7 | 1.7 | 1.7 | 1.7 |
| Other components | 5.8 | 5.8 | 5.8 | 5.2 | 5 |
| Total Mix | 100 | 100 | 100 | 100 | 100 |
| n-pentane | 7 | 7 | 7 | 7 | 7 |
| PMDI index | 1.8 | 1.8 | 1.8 | 1.8 | 1.8 |
| Curing properties GCS* (kPa) at 5 min. | 85 | 65 | 68 | 72 | 71 |
| Fire behavior DIN 4102 (cm) | 15.5 | 19 | 20 | 21 | 21 |

| | | | | | |
|---|---|---|---|---|---|
| --denotes not present in formulation *GCS (green compressive strength): This is measured on free rise foam produced inside a wooden box (20x20x20cm), removed 2 minutes after reaction initiation, and placed (perpendicular to rise) on a 5x5cm wood base that is held on the lower plate of a 10 kN Instron instrument. The upper Instron plate is moved at 5 minutes to press the foam at constant speed (20 mm per minute). The obtained GCS value is expressed in kPa. | | | | | |

It is seen that Example 1 shows improved curing (green compressive strength, GCS test) and fire behavior properties (German Standard DIN 4102 test, measuring flame height).

### Comparative Examples 6-10

For comparative purposes, five formulations are prepared according to Table 2, using the same formulation method and means as used for Example 1 and Comparative Examples 2-5. Results of Comparative Example 6 show that combining an aromatic polyester polyol with an aromatic polyether polyol that is not a Novolac-type polyol does not improve curing properties when compared to Comparative Examples 7-10.

**Table 2**

| Component (pbw) | Comparative Example 6 | Comparative Example 7 | Comparative Example 8 | Comparative Example 9 | Comparative Example 10 |
|---|---|---|---|---|---|
| VORANOL™ RN490 | 25 | 25 | 25 | 25 | 25 |
| TERATE™ 2541V | 27.65 | -- | -- | -- | -- |
| TERCAROL™ 5902 | 21.65 | 21.65 | 21.65 | 21.65 | 21.65 |
| IP 585 | -- | -- | -- | -- | -- |
| PEG 200 | -- | 27.65 | -- | -- | -- |
| PEG 400 | -- | -- | 27.65 | -- | -- |
| VORANOL™ P400 | -- | -- | -- | 27.65 | -- |
| VORANOL™ 1010L | -- | -- | -- | -- | 27.65 |
| Trichloroisopropyl phosphate | 6.58 | 6.58 | 6.58 | 6.58 | 6.58 |
| Triethyl phosphate | 7.72 | 7.72 | 7.72 | 7.72 | 7.72 |
| DABCO™ DC5598 | 1.8 | 1.8 | 1.8 | 1.8 | 1.8 |
| DABCO™ K2097 | 1 | 1 | 1 | 1 | 1 |
| Dimethylcyclohexylamine | 1 | 1 | 1 | 1.6 | 1.8 |
| Water | 1.7 | 1.7 | 1.7 | 1.7 | 1.7 |
| Other components | 5.8 | 5.8 | 5.8 | 5.2 | 5 |
| Total Mix | 100 | 100 | 100 | 100 | 100 |
| n-pentane | 7 | 7 | 7 | 7 | 7 |
| PMDI index | 1.8 | 1.8 | 1.8 | 1.8 | 1.8 |
| Curing properties GCS (kPa) at 5 min. | 79 | 82 | 80 | 83 | 78 |
| Fire behavior DIN 4102 (cm) | 16.5 | 20 | 22 | 21 | 21 |

| | | | | | |
|---|---|---|---|---|---|
| -- denotes not present in formulation | | | | | |

### Comparative Example 11 and Examples 12-13

Three foam formulations are prepared using a high pressure foaming machine and the same evaluation methods as in previous Examples and Comparative Examples, with the formulations shown in Table 3. In this case Examples 12-13 each contain an aromatic polyester polyol, while Comparative Example 11 does not.

**Table 3**

| | Comparative Example 11 | Example 12 | Example 13 |
|---|---|---|---|
| **Components (pbw)** | | | |
| IP 585 | 52 | 29.65 | 21.65 |
| RA640 | 9.56 | 3 | 3 |
| CP1055 | 5 | 5 | 5 |
| DABCO™ DC5598 | 1.43 | 1.8 | 1.8 |
| Triethylphosphate | 7.72 | 7.72 | 7.72 |
| Trichloropropylphosphate | 6.58 | 6.58 | 6.58 |
| VORANOL™ RN490 | 14.52 | 25 | 25 |
| TERATE™ 2541V | -- | 19.65 | 27.65 |
| CURITHANE™ 52 | 1.6 | -- | -- |
| Water | 1.49 | -- | -- |
| Total Mix | 99.9 | 100 | 100 |

| **Components Ratios** | | | |
|---|---|---|---|
| Polyol Mix | 100 | 100 | 100 |
| CM265 additive | 1.18 | -- | -- |
| Water | -- | 1.75 | 1.75 |
| TMR | 0.64 | -- | -- |
| Dimethylcyclohexylamine | 1.28 | 1 | 0.9 |
| DABCO™ K2097 | -- | 1.1 | 1.1 |
| n-pentane | 6.1 | 7.1 | 7.1 |
| VORANATE™ M600 | 160 | 164 | 169 |
| Index | 1.63 | 1.8 | 1.8 |
| | | | |
| Free Rise Density (f.r.d.) | 36.5 | 37 | 37.1 |
| Reactivity, cream time/gel time (sec) | 7/35 | 7/35 | 8/36 |
| | | | |

| **DCP mold, (15x50x50)cm, foam density; 15% overpack vs. free rise density** | | | |
|---|---|---|---|
| Post expansion* (%) at 14 minutes | 4.5 | 3 | 3 |
| Post expansion* (%) at 12 minutes | 4.9 | 3.3 | 3.5 |
| | | | |

| **GCS test** | | | |
|---|---|---|---|
| 4 min. (kPa) | 63 | 70 | 68 |
| 6 min. (kPa) | 82 | 94 | 90 |
| 8 min. (kPa) | 101 | 111 | 107 |
| | | | |
| DIN 4102, flame height (cm) | 19 | 17 | 15 |

| | | | |
|---|---|---|---|
| --denotes not present in formulation *Post expansion % is difference between the maximum thickness of (15x50x50)cm molded foam (measured after demolding it at fixed time and cutting it from corner to corner) and the original thickness multiplied by 100. | | | |

It is seen that Examples 12 and 13 show improved curing (reduced post expansion and enhanced green compressive strength results) and improved fire behavior properties (German Standard DIN 4102 test, measuring flame height), as compared with Comparative Example 11.

## Claims

1. A polyurethane or polyisocyanurate foam formulation comprising
(a) a formulated polyol comprising
(i) from 20 to 40 percent by weight of an aromatic polyester polyol having a hydroxyl number greater than 50 mg KOH/g and a functionality of at least 2;
(ii) from 10 to 30 percent by weight of a Novolac-type polyether polyol; and
(iii) from 5 to 40 percent by weight of a sucrose- or sorbitol-initiated polyol having a hydroxyl number greater than 200 mg KOH/g and a functionality of at least 4;
all percentages being based on the weight of the formulated polyol as a whole;
(b) a polyisocyanate; and
(c) a blowing agent;
such that the stoichiometric index of the polyisocyanate to the formulated polyol is from 100 to 250; and
wherein the foam formulation is suitable for preparing a polyurethane or polyisocyanurate foam showing processability and fire behavior that are improved in comparison with polyurethane or polyisocyanurate foams prepared from foam formulations that are the same except for the formulated polyol.

2. The formulation of Claim 1 wherein the aromatic polyster polyol is selected from aromatic polyester polyols having an acid component comprising at least 30 percent by weight of phthalic acid residues, or residues of isomers thereof.

3. The formulation of Claim 2 wherein aromatic polyester polyol has an aromatic ring content from 70 to 90 percent by weight, based on the total compound weight.

4. The formulation of Claim 1 wherein the aromatic polyester polyol is obtained by the transesterification of crude reaction residues or scrap.

5. The formulation of Claim 1 wherein the aromatic polyester polyol has a hydroxyl number ranging from greater than 50 mg KOH/g to 400 mg KOH/g.

6. The formulation of Claim 5 wherein the hydroxyl number ranges from 150 to 300.

7. The formulation of Claim 1 wherein the aromatic polyester polyol has a functionality ranging from 2 to 8.

8. The formulation of Claim 1 wherein the Novolac-type polyol has a molecular weight from 300 to 1500.

9. A polyurethane or polyisocyanurate foam prepared from the formulation of Claim 1.

10. A formulated polyol comprising
(a) from 20 to 40 percent by weight of an aromatic polyester polyol having a hydroxyl number greater than 50 mg KOH/g and a functionality of at least 2;
(b) from 10 to 30 percent by weight of a Novolac-type polyether polyol; and
(c) from 5 to 40 percent by weight of a sucrose- or sorbitol-initiated polyol having a hydroxyl number greater than 200 mg KOH/g and a functionality of at least 4.

11. A method of preparing a polyurethane or polyisocyanurate foam comprising contacting, under foam-forming conditions,
(a) a formulated polyol comprising
(i) from 20 to 40 percent by weight of an aromatic polyester polyol having a hydroxyl number greater than 50 mg KOH/g and a functionality equal to or greater than 2;
(ii) from 10 to 30 percent by weight of a Novolac-type polyether polyol; and
(iii) from 5 to 40 percent by weight of a sucrose- or sorbitol-initiated polyol having a hydroxyl number greater than 200 mg KOH/g and a functionality of at least 4;
all percentages being based on the weight of the formulated polyol as a whole;
(b) a polyisocyanate; and
(c) a blowing agent;
at an isocyanate index ranging from 100 to 250; to form a rigid polyurethane or polyisocyanurate foam.

12. The method of Claim 11 wherein the formulated polyol, polyisocyanate and blowing agent are contacted as two streams, three streams, or more than three streams.

13. The method of Claim 12 wherein the mixed streams are sprayed or deposited onto a substrate and wherein the substrate is selected from the group consisting of a rigid facing sheet, a flexible facing sheet, a layer of similar or dissimilar polyurethane or polyisocyanurate, or a conveyor belt.

14. The method of Claim 13 wherein a sandwich panel is formed.

15. The foam of Claim 9 wherein the foam is a layer in a sandwich panel.

## Patentansprüche

1. Eine Polyurethan- oder Polyisocyanuratschaumstoffformulierung, beinhaltend
(a) ein formuliertes Polyol, beinhaltend
(i) zu 20 bis 40 Gewichtsprozent ein aromatisches Polyesterpolyol mit einer Hydroxylzahl von mehr als 50 mg KOH/g und einer Funktionalität von mindestens 2;
(ii) zu 10 bis 30 Gewichtsprozent ein novolakartiges Polyetherpolyol; und
(iii) zu 5 bis 40 Gewichtsprozent ein saccharose- oder sorbitolinitiiertes Polyol mit einer Hydroxylzahl von mehr als 200 mg KOH/g und einer Funktionalität von mindestens 4;
wobei sich alle Prozentsätze auf das Gewicht des formulierten Polyols als Ganzes beziehen;
(b) ein Polyisocyanat; und
(c) ein Treibmittel;
sodass der stöchiometrische Index des Polyisocyanats zu dem formulierten Polyol 100 bis 250 beträgt; und
wobei die Schaumstoffformulierung zum Herstellen eines Polyurethan- oder Polyisocyanuratschaumstoffs geeignet ist, der eine Verarbeitbarkeit und ein Brandverhalten zeigt, welche im Vergleich zu Polyurethan- oder Polyisocyanuratschaumstoffen, die abgesehen von dem formulierten Polyol aus den gleichen Schaumstoffformulierungen hergestellt sind, verbessert sind.

2. Formulierung gemäß Anspruch 1, wobei das aromatische Polyesterpolyol aus aromatischen Polyesterpolyolen ausgewählt ist, die eine Säurekomponente aufweisen, welche mindestens 30 Gewichtsprozent Phthalsäurereste oder Reste von Isomeren davon beinhaltet.

3. Formulierung gemäß Anspruch 2, wobei das aromatische Polyesterpolyol bezogen auf das Gesamtverbindungsgewicht einen Gehalt an aromatischen Ringen von 70 bis 90 Gewichtsprozent aufweist.

4. Formulierung gemäß Anspruch 1, wobei das aromatische Polyesterpolyol durch die Umesterung von rohen Reaktionsrückständen oder Ausschuss erhalten wird.

5. Formulierung gemäß Anspruch 1, wobei das aromatische Polyesterpolyol eine Hydroxylzahl im Bereich von mehr als 50 mg KOH/g bis 400 mg KOH/g aufweist.

6. Formulierung gemäß Anspruch 5, wobei die Hydroxylzahl im Bereich von 150 bis 300 liegt.

7. Formulierung gemäß Anspruch 1, wobei das aromatische Polyesterpolyol eine Funktionalität im Bereich von 2 bis 8 aufweist.

8. Formulierung gemäß Anspruch 1, wobei das novolakartige Polyol ein Molekulargewicht von 300 bis 1500 aufweist.

9. Ein Polyurethan- oder Polyisocyanuratschaumstoff, hergestellt aus der Formulierung gemäß Anspruch 1.

10. Ein formuliertes Polyol, beinhaltend
(a) zu 20 bis 40 Gewichtsprozent ein aromatisches Polyesterpolyol mit einer Hydroxylzahl von mehr als 50 mg KOH/g und einer Funktionalität von mindestens 2;
(b) zu 10 bis 30 Gewichtsprozent ein novolakartiges Polyetherpolyol; und
(c) zu 5 bis 40 Gewichtsprozent ein saccharose- oder sorbitolinitiiertes Polyol mit einer Hydroxylzahl von mehr als 200 mg KOH/g und einer Funktionalität von mindestens 4.

11. Ein Verfahren zum Herstellen eines Polyurethan- oder Polyisocyanuratschaumstoffs, beinhaltend das In-Kontakt-Bringen, unter schaumbildenden Bedingungen,
(a) eines formulierten Polyols, beinhaltend
(i) zu 20 bis 40 Gewichtsprozent ein aromatisches Polyesterpolyol mit einer Hydroxylzahl von mehr als 50 mg KOH/g und einer Funktionalität gleich oder größer als 2;
(ii) zu 10 bis 30 Gewichtsprozent ein novolakartiges Polyetherpolyol; und
(iii) zu 5 bis 40 Gewichtsprozent ein saccharose- oder sorbitolinitiiertes Polyol mit einer Hydroxylzahl von mehr als 200 mg KOH/g und einer Funktionalität von mindestens 4;
wobei sich alle Prozentsätze auf das Gewicht des formulierten Polyols als Ganzes beziehen;
(b) eines Polyisocyanats; und
(c) eines Treibmittels;
bei einem Isocyanat-Index im Bereich von 100 bis 250; um einen steifen Polyurethan- oder Polyisocyanuratschaumstoff zu bilden.

12. Verfahren gemäß Anspruch 11, wobei das formulierte Polyol, das Polyisocyanat und das Treibmittel als zwei Ströme, drei Ströme oder mehr als drei Ströme miteinander in Kontakt gebracht werden.

13. Verfahren gemäß Anspruch 12, wobei die gemischten Ströme auf ein Substrat gesprüht oder darauf abgelagert werden, und wobei das Substrat aus der Gruppe, bestehend aus einer steifen Deckbahn, einer flexiblen Deckbahn, einer Schicht aus ähnlichem oder unähnlichem Polyurethan oder Polyisocyanurat oder einem Förderband, ausgewählt ist.

14. Verfahren gemäß Anspruch 13, wobei eine Verbundtafel gebildet wird.

15. Schaumstoff gemäß Anspruch 9, wobei der Schaumstoff eine Schicht in einer Verbundtafel ist.

## Revendications

1. Une formulation de mousse de polyuréthane ou de polyisocyanurate comprenant
(a) un polyol formulé comprenant
(i) de 20 à 40 pour cent en poids d'un polyol de polyester aromatique ayant un indice d'hydroxyle supérieur à 50 mg KOH/g et une fonctionnalité d'au moins 2 ;
(ii) de 10 à 30 pour cent en poids d'un polyol de polyéther de type Novolaque ; et
(iii) de 5 à 40 pour cent en poids d'un polyol amorcé par du saccharose ou du sorbitol ayant un indice d'hydroxyle supérieur à 200 mg KOH/g et une fonctionnalité d'au moins 4 ;
tous les pourcentages étant rapportés au poids du polyol formulé dans son ensemble ;
(b) un polyisocyanate ; et
(c) un agent gonflant ;
de telle sorte que l'indice stoechiométrique du polyisocyanate au polyol formulé aille de 100 à 250 ; et
la formulation de mousse étant appropriée pour la préparation d'une mousse de polyuréthane ou de polyisocyanurate présentant une aptitude au traitement et un comportement au feu qui sont améliorés par comparaison avec des mousses de polyuréthane ou de polyisocyanurate préparées à partir de formulations de mousse qui sont les mêmes à l'exception du polyol formulé.

2. La formulation de la revendication 1 dans laquelle le polyol de polyester aromatique est sélectionné parmi des polyols de polyester aromatiques ayant un constituant acide comprenant au moins 30 pour cent en poids de résidus d'acide phtalique, ou de résidus d'isomères de celui-ci.

3. La formulation de la revendication 2 dans laquelle le polyol de polyester aromatique a une teneur en cycle aromatique allant de 70 à 90 pour cent en poids, rapporté au poids total du composé.

4. La formulation de la revendication 1 dans laquelle le polyol de polyester aromatique est obtenu par la transestérification de résidus ou rebuts de réaction bruts.

5. La formulation de la revendication 1 dans laquelle le polyol de polyester aromatique a un indice d'hydroxyle compris dans la gamme allant de plus de 50 mg KOH/g à 400 mg KOH/g.

6. La formulation de la revendication 5 dans laquelle l'indice d'hydroxyle est compris dans la gamme allant de 150 à 300.

7. La formulation de la revendication 1 dans laquelle le polyol de polyester aromatique a une fonctionnalité comprise dans la gamme allant de 2 à 8.

8. La formulation de la revendication 1 dans laquelle le polyol de type Novolaque a une masse moléculaire allant de 300 à 1 500.

9. Une mousse de polyuréthane ou de polyisocyanurate préparée à partir de la formulation de la revendication 1.

10. Un polyol formulé comprenant
(a) de 20 à 40 pour cent en poids d'un polyol de polyester aromatique ayant un indice d'hydroxyle supérieur à 50 mg KOH/g et une fonctionnalité d'au moins 2 ;
(b) de 10 à 30 pour cent en poids d'un polyol de polyéther de type Novolaque ; et
(c) de 5 à 40 pour cent en poids d'un polyol amorcé par du saccharose ou du sorbitol ayant un indice d'hydroxyle supérieur à 200 mg KOH/g et une fonctionnalité d'au moins 4.

11. Une méthode de préparation d'une mousse de polyuréthane ou de polyisocyanurate comprenant la mise en contact, dans des conditions de formation de mousse,
(a) d'un polyol formulé comprenant
(i) de 20 à 40 pour cent en poids d'un polyol de polyester aromatique ayant un indice d'hydroxyle supérieur à 50 mg KOH/g et une fonctionnalité supérieure ou égale à 2 ;
(ii) de 10 à 30 pour cent en poids d'un polyol de polyéther de type Novolaque ; et
(iii) de 5 à 40 pour cent en poids d'un polyol amorcé par du saccharose ou du sorbitol ayant un indice d'hydroxyle supérieur à 200 mg KOH/g et une fonctionnalité d'au moins 4 ;
tous les pourcentages étant rapportés au poids du polyol formulé dans son ensemble ;
(b) d'un polyisocyanate ; et
(c) d'un agent gonflant ;
à un indice d'isocyanate compris dans la gamme allant de 100 à 250 ; afin de former une mousse de polyuréthane ou de polyisocyanurate rigide.

12. La méthode de la revendication 11 dans laquelle le polyol formulé, le polyisocyanate et l'agent gonflant sont mis en contact sous la forme de deux courants, de trois courants, ou de plus de trois courants.

13. La méthode de la revendication 12 dans laquelle les courants mélangés sont pulvérisés ou déposés sur un substrat et dans laquelle le substrat est sélectionné dans le groupe constitué d'une feuille de garniture rigide, d'une feuille de garniture souple, d'une couche de polyuréthane ou de polyisocyanurate similaire ou dissimilaire, ou d'une courroie transporteuse.

14. La méthode de la revendication 13 dans laquelle un panneau en sandwich est formé.

15. La mousse de la revendication 9, la mousse étant une couche dans un panneau en sandwich.
